(19) Europäisches Patentamt

European Patent Office

Office européen des brevets

(11) **EP 1 094 893 B1**

(12) **EUROPEAN PATENT SPECIFICATION**

(45) Date of publication and mention
of the grant of the patent:
**19.02.2003 Bulletin 2003/08**

(21) Application number: **99944932.5**

(22) Date of filing: **16.06.1999**

(51) Int Cl.[7]: **B01J 19/00**, G05B 17/00,
G05B 1/00

(86) International application number:
**PCT/NO99/00195**

(87) International publication number:
**WO 00/000279 (06.01.2000 Gazette 2000/01)**

(54) **ENTROPY OPTIMAL OPERATION AND DESIGN OF ONE OR SEVERAL CHEMICAL REACTORS**

ENTROPIE-OPTIMALE VERFAHRENSWEISE UND DESIGN EINES ODER MEHRERER
REAKTOREN

FONCTIONNEMENT OPTIMAL DE L'ENTROPIE ET CONCEPTION D'UN OU DE PLUSIEURS
REACTEURS CHIMIQUES

(84) Designated Contracting States:
**AT BE CH DE DK ES FI FR GB IE IT LI LU NL PT SE**

(30) Priority: **17.06.1998 NO 982798**

(43) Date of publication of application:
**02.05.2001 Bulletin 2001/18**

(73) Proprietors:
• **Leiv Eiriksson Nyfotek AS**
  **7462 Trondheim (NO)**
• **Kjelstrup, Signe**
  **7016 Trondheim (NO)**
• **Island, Trond Vegard**
  **3926 Porsgrunn (NO)**
• **Sauar, Erik**
  **0862 Oslo (NO)**
• **Bedeaux, Dick**
  **7016 Trondheim (NO)**

(72) Inventors:
• **KJELSTRUP, Signe**
  **N-7016 Trondheim (NO)**
• **ISLAND, Trond, Vegard**
  **N-3926 Porsgrunn (NO)**
• **SAUAR, Erik**
  **N-0862 Oslo (NO)**
• **BEDEAUX, Dick**
  **N-7016 Trondheim (NO)**

(74) Representative: **Hucker, Charlotte Jane**
  **Gill Jennings & Every**
  **Broadgate House,**
  **7 Eldon Street**
  **London EC2M 7LH (GB)**

(56) References cited:
  **DE-A1- 3 525 248**        **DE-A1- 3 724 846**
  **GB-A- 1 230 796**         **SU-A- 1 341 654**
  **US-A- 3 663 805**         **US-A- 4 589 072**
  **US-A- 5 640 491**

• **COMPUTERS CHEMICAL ENGINEERING
  SAUAR ERIK ET AL: 'Equipartition of
  Forces-Extension to Chemical Reactors' vol. 21,
  1997, GB, pages S29 - S34, XP002921056**
• **DATABASE WPI Week 8818, 08 November 1999
  Derwent Publications Ltd., London, GB; AN
  1988-124908, XP002921057 & SU 1 341 654 A
  (LARIONOV S V) 30 September 1987**

**Description**

The present invention concerns a method for optimisation i.e. minimisation, of entropy production in one or several chemical reactors, where a first number of in-feeded reagents are transformed into another number of out-feeded products, and where a yield of one particular of the out-feeded products is set up as a predetermined value (J).

Optimisation of temperature profiles throughout reactors has previously been referred to in the patent literature. US 4,571,325 describes a reactor suitable for exothermic and endothermic catalytic processes wherein an optimised temperature profile is provided which further leads to increased productivity.

Further US 4,696,735 describes a method for cooling of an exothermic reaction process in multiphase reactors. The purpose is to provide an approximate isothermal temperature profile for the components in the reactor. A further feature is a stable temperature profile in each reactor.

WO-96/16007 describes a method for obtaining a certain temperature profile longitudinally in a reactor where an optimised reaction and product selectivity is obtained for an endothermic reaction. The reaction mixture is passed through a stationary reactor where the desired temperature profile is established through heat supply at the beginning of the reactor.

Fogler, H.S., Elements of Chemical Reaction Engineering, $2^{nd}$. Ed., Prentice-Hall International, Inc., USA, 1992, describes temperature estimimation of a non-isothermal reactor used in the industry, wherein $SO_2$ is burned (oxidized).

Known art mentioned above does not deal with entropy optimisation at a predetermined, constant value for the out-feeded products, but on the other hand optimised temperature profiles. One object of the present invention is approximately constant driving forces through the reactor(s), which provides for a method with minimum loss of energy (loss of exergy) and an entropy optimised method.

The present method concerns the principle of equipartition of forces, which principle is derived for linear transport processes (Sauar et al, 1996); especially for transport of heat and mass in a distillation tower (Ratkje et al, 1995). It is further known that all driving forces for transportation of mass and heat have to be distributed uniformly (constant) throughout the process unit to achieve a minimal entropy production. The entropy production, and thereby lost work (exergy loss), is at a minimum in the mentioned case. It was also shown that this applies to chemical reactors which operate close to equilibrium (Sauar et al, Computers Chem. Engineering (1997) Vol. 21 Suppl., pp. 529-534). A method for minimisation of the the production of entropy in one or more reactors which are not at equilibrium, is on the other hand not known. The present invention concerns optimisation of chemical reactors far away from equilibrium, close to equilibrium and at equilibrium.

The present invention concerns a method for minimisation of the production of entropy in one or more chemical reactors, where in-feeded reagents are transformed to out-feeded products, and where a yield of a distinct are of the out-feeded products is set up as a predetermined value J, where:

-   concentration profiles X for the reagents, possible intermediate products and the products, and a pressure profile P through the reactor(s) first are established as known, preferably measured or empirical found values;
-   a temperature profile through the reactor(s) is determined by calculation according to a relationship between concentration c; pressure P, temperature T, and based on known parameters which form a foundation for the calculation, and by use of an estimated Lagrange-multiplier $\lambda$ which is of influence on a desired yield J of the out-feeded products, according to equation (10) below;
-   the yield is first calculated as a theoretical value $J_{num}$ based on the estimated $\lambda$ and the starting conditions of the process using known thermodynamic and reaction kinetic relations, according to equation (15) below, where the starting conditions of the process also will comprise a temperature, but the mentioned temperature should not be mixed up with the optimal temperature;
-   calculated yield $J_{num}$ is then compared with the introductorily predetermined value J, and if these values are different, a new calculation is made of concentration, pressure and temperature profile through the reactor(s) by employing a new value for the Lagrange-multiplier $\lambda$, etc. until the yield values $J_{num}$ and J becomes equal, and
-   the reactor(s) are for any predetermined yield value J operated with pressure and concentration profiles P, X and the corresponding calculated temperature profile.

It is further a preferred embodiment of the present invention that the reactors are operated far from equilibrium. For reactions of spontaneous type a negative Lagrange-multiplier is employed. The method is further characterized by that driving forces are defined as $-\frac{A}{T}$, wherein A is affinity stated in J/mol, and where the driving force is almost uniformly distributed through the reactor(s). Driving force is a function of the concentration c, the temperature T, and the pressure P. Further the present invention comprises a method for optimisation of one or more exothermic and endothermic reactors. The method for exothermic reactors includes passing the reagents through a first sub-volume of the reactor(s) without cooling, possibly with reduced cooling. Further the reagents for exothermic reactor(s) are passed through a last sub-volume of the reactor(s) without cooling, possibly with reduced cooling, leading to an increased final temperature. By the method according to the present invention for endothermic reactor(s) the reagents are passed through a first sub-volume of the reactor(s) without heat supply, possibly with reduced heat supply. For endothermic reactor(s) the reagents are passed through a last sub-volume of the reactor(s) without heat supply, possibly with reduced heat supply, leading to an increase of the final temperature. The sub-volume can be big or small, and supplied or removed heat can not be determined until 7 is known.

The present invention describes calculation of optimal operating conditions, minimisation of entropy, in reactors, generally one or more chemical reactors of tube and batch type in order to achieve minimum loss of work (loss of exergy). The loss of heat from irreversible reactions can in many cases not be transformed into work and involves extensive loss of exergy in the industry. The method provided in the present invention describes optimisation of operating conditions for one or more reactors where it is required that the yield of one particular of the out-feeded products J is constant (predetermined). The minimisation of the entropy in the present invention gives an energy saving by the fact that heat and vapour can be released at a higher temperature and pressure (with higher contents of exergy) for exothermic reactions. For endothermic reactions, however, the energy saving involves that heat and vapour can be fed to one or more reactors at lower temperature and pressure, or in lower amounts at the same temperature and pressure.

In practice the operating conditions could be altered by changing the starting conditions (temperature, pressure and composition), changing cooling/heating, changing the reactor configuration (e.g. operating several smaller reactors in series) etc.

Based on known art (irreversible thermodynamics) the thermal power, X, between two systems 1 and 2 can be expressed as follows:

$$X_{heat} = \Delta\left(\frac{1}{T}\right) = \frac{1}{T_2} - \frac{1}{T_1} \qquad (1)$$

where

$T_1 =$     the temperature in sub-volume 1
$T_2 =$     the temperature in sub-volume 2

This is driving force for transport of heat in an heat exchanger between the two systems 1 and 2. The reaction which takes place in a chemical reactor can be considered as transport of heat in a heat exchanger. An optimal heat exchanger according to known art as to equipartion of forces, with regard to minimum loss of work (loss of exergy), has a driving force given by equation (1) and constant everywhere in the heat exchanger. This explains why a counter-current heat exchanger is more energy effecient than a co-current heat exchanger, the power is *closer* to constant in a counter-current heat exchanger.

If a chemical reaction is carried out entirely reversible, the maximum work equivalent to $\Delta_r G$ (degree of efficiency $\eta=1$) could be taken out. This will not be very practical because it would involve that the reaction has to be run endless slow. Because most of the chemical reactions are carried out in an irreversible manner, the work which can be taken out will be *less* than $\Delta_r G$. The degree of efficiency (the absolute) has been described by Denbigh (1956):

$$\eta = \frac{W_{max} - T_0 \cdot \Theta}{W_{max}} \qquad (2)$$

where

$T_0 =$     reference temperature
$\Theta =$     entropy production by the total system

The maximal work, $W_{max}$, which is available for work (in relation to the surrondings according to the 2nd law of thermodynamics) is given as (Ratkje m.fl., 1995):

$$-W_{max} = \Delta H - T_0 \cdot \Delta S = \Delta_r G(p_0, T_0) = \Delta Ex \qquad (3)$$

where

ΔEx =     the change of exergy

The equation shows how important it is to reduce loss of work or loss of exergy, $T_0 \cdot \Theta$, (which is 0 for a reversible process).

Loss of exergy because irreversibleness of processes has been known for a long time, and has been thoroughly described by Denbigh (1956) for chemical reactions. Several methods of analysis are currently employed to calculate the energy effeciency for a process (e.g. analysis of exergy). With regard to methods for reducing this loss of exergy, achievement is modest. This concerns not least processes which implies transfer of mass. The best known method is to increase the size of the process unit in order to increase the extent of reversibility, which involves an increase in the retention time; however, this is normally an expensive solution.

The present invention is based on the definition of forces and fluxes from irreversible thermodynamic theory. The method is described below in terms of combustion (exothermic) of $SO_2(g)$ in a converter (tube reactor), wherein said combustion is an important stage in the production of sulphuric acid.

Local production of entropy per time and volume unit due to chemical reaction (there will also be loss of energy from heat and mass transport, but these are vectorial sizes as opposed to the velocity of the reaction, and can be optimised independent of each other) is in irreversible thermodynamic defined as (de Groot & Mazur, 1962):

$$\theta_{chemical} = r \cdot \left( -\frac{A}{T} \right) \qquad\qquad (4)$$

where

r =     velocity of the reaction
$-\frac{A}{T}$ =     driving force for chemical reaction

The affinity A, is equal to the change of Gibbs free energy for the reaction at constant pressure, $\Delta_r G$, and is thus the change of the sum of chemical potential, $\mu$, for products and reactants.

The total production of entropy (net increase of the total entropy due to the fact that the reaction is irreversible) in the reactor can be found by integrating over the reactor in time and space:

$$\Theta_{chemical} = \int_V \int_t \theta_{chemical} \, dV dt \qquad\qquad (5)$$

where

V =     volume of the reactor
t =     time

For a reversible reaction there is no increase in the total production of entropy; $\Theta=0$. The production of entropy given by equation (4) should be minimized because it is reason for loss of work for a given yield $J$, which means that the basis is a given reactor. The production $J$ is given by:

$$J = \int_V \int_t r \, dV dt \qquad\qquad (6)$$

This approach to the problem can be solved by using the Lagrange method with constant Lagrange-multiplier ($\lambda$). Functional derivation with regard to driving force (we wish to see what the optimal driving force is) gives this:

$$\frac{\delta \Theta}{\delta \left( \frac{A}{T}(x) \right)} = -\lambda \cdot \frac{\delta J}{\delta \left( \frac{A}{T}(x) \right)} \qquad (7)$$

where δ means functionally derived.

Further a given reaction is taken as starting point, as follows:

$$A \rightarrow B \qquad (I)$$

- The velocity of the reaction must be known for the reaction, for example:

$$r = k_1 \cdot c_A - k_2 \cdot c_B = k_1 \cdot c - k_2 \cdot (1-c) \qquad (8)$$

where

k = velocity constant
c = concentration

- Mass conservation laws are employed to indicate dependency between the concentrations (normalized):

$$c = c_A = 1 - c_B \qquad (9)$$

All concentrations/partial pressures are determined as a function of the degree of reaction based on mass conservation laws.

- The thermodynamic expression for the chemical force is established:

$$-\frac{A}{T} = -\frac{1}{T} \cdot (\mu_B - \mu_A) = -R \cdot \left[ \ln\left(\frac{1-c}{c}\right) + \ln K_{eq} \right] \qquad (10)$$

where

R = gas constant

Ideal mixing has been chosen for convenience where the equilibrium constant $K_{eq} = k_2/k_1$ is inserted.

- From equation (4) and (6) <u>the amount of component B</u> produced is determined:

$$J = \Omega \cdot t \cdot \int_L (k_1 \cdot c - k_2 \cdot (1-c)) dx \qquad (11)$$

where

Ω = the cross section of the reactor

It was assumed that the reactor has a constant cross section, and that the reactor is a tube type reactor. Thus it is integrated over the whole length of the reactor, *L*. (If the reactor is a batch reactor, it is integrated over the time t.)

- Equation (7) now can be written as:

$$\Omega \cdot t \cdot \frac{\delta}{\delta\left(\frac{A}{T}(x)\right)} \int_L -r \cdot \frac{A}{T} dx' = -\lambda \cdot \Omega \cdot t \cdot \frac{\delta}{\delta\left(\frac{A}{T}(x)\right)} \int_L r\,dx'$$

$$\Downarrow \qquad\qquad (12)$$

$$\frac{\delta}{\delta\left(\frac{A}{T}(x)\right)} \int_L \left(-r \cdot \frac{A}{T} + \lambda \cdot r\right) dx' = 0$$

- The force, $A/T$, is a function of the concentration, $c$, the temperature, $T$, and the pressure, $P$. The same applies to the velocity of the reaction, $r$. We can make the derivation with regard to the concentration. A small sub-volume is conceivable where pressure and temperature are constant. This because of:

$$\frac{\cdot \delta}{\delta c(x)} \int_L \left[-r \cdot \frac{A}{T} + \lambda \cdot r\right] dx' = \frac{\partial}{\partial c(x)}\left(-r \cdot \frac{A}{T} + \lambda \cdot r\right) = 0 \qquad (13)$$

where $\partial$ stands for partially derived.

There is a direct connection between the affinity, $A$, and the concentration, $c$. Both can be used to characterize the local progress of the reaction. Using the temperature or the pressure to charackerize the progress of the reaction would be wrong because temperature and pressure are not functions of the degree of reaction.

- Equation (12) has the following solution for *each* sub-volume:

$$R \cdot \left[\ln\left(\frac{1-c}{c}\right) + \ln K_{eq}\right] - \frac{R}{k_1 + k_2} \cdot \left[k_1 \cdot c - k_2 \cdot (1-c)\right] \cdot \left(\frac{1}{1-c} + \frac{1}{c}\right) = \lambda \qquad (14)$$

The first part is recognized as the force (given by equation (10)). The new expression for the thermodynamic force is as follows:

$$-\frac{A}{T} = \frac{R}{k_1 + k_2} \cdot \left(\frac{1}{1-c} + \frac{1}{c}\right) - \lambda \qquad (15)$$

- When $\frac{A}{T}$ and $\lambda$ are known, the optimal temperature profile, $T_{opt}$, can be determined.

Equation (14) describes how the force should be to make the reactor as energy effective as possible for a constant yield if $J=J_{num}$. This force is not necessarily equipartitioned as it is for chemical reactions close to equilibrium (Sauar et al., 1997).

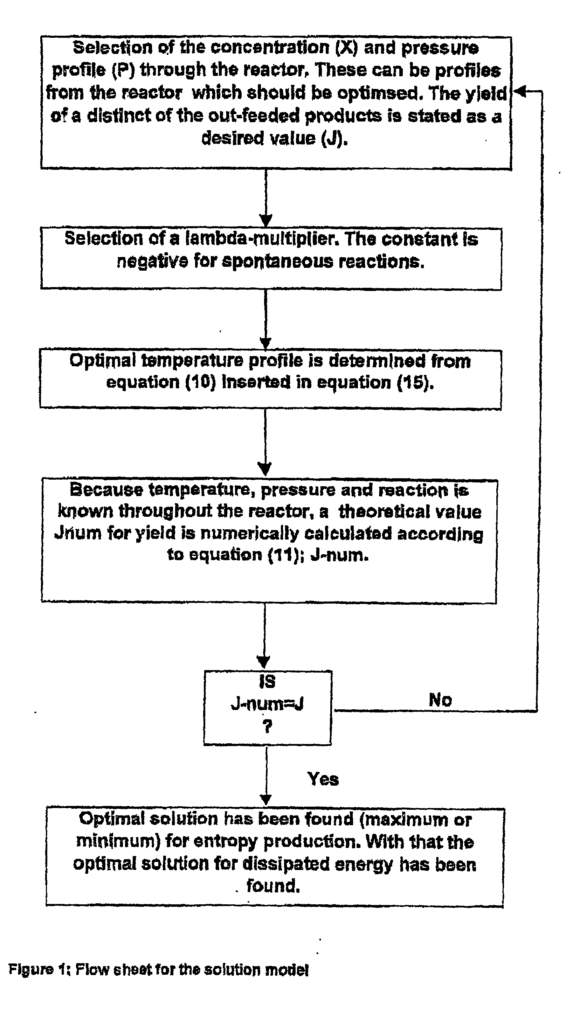

Figure 1 shows a flow diagram representing the method.

- Temperature, concentration and pressure are basically unknown throughout the reactor. We are then selecting concentration and pressure profile through the reactor. This can be for example profiles from the reactor which should be optimised.

- By merging equation (10) into equation (15), optimal temperature profile in the reactor for the selected Lagrange-multiplier, $\lambda$, is determined. The production $J_{num}$ is controlled against the predetermined value J. If the production differs from the predetermined value J for yield of the out-feeded products, the Lagrange-multiplier, the $\lambda$-multiplier, is changed. Only the concentration, pressure and temperature profile which gives the predetermined product (the predetermined value J for yield of the out-feeded products) out of the reactor, is a real solution to the problem.

- Equation (15) applies throughout the reactor (continuously). The production *J* (theoretical value) is determined numerically by summarizing the production in all of the sub-volumes.
- By plotting the force given by equation (10) or equation (15) for arbitrary and optimal operating conditions ($J=J_{num}$) it can be evaluated if work can be saved by the operation of the reactor. Variance between these temperature profiles indicates clearly that the reactor can be made more efficient.
- The production of entropy from chemical reaction leads to loss of work in the reactor (Denbigh, 1956):

$$T_0 \cdot \Theta_{chemical} = T_0 \cdot \iint_{t\,V} \theta_{chemical}\, dt dV \qquad (16)$$

The procedure for minimisation of the production of entropy is futher elucidated by combustion of $SO_{2(g)}$ in a converter. The converter is in principle a heat exchanger in which numerous (4631) catalyst filled tubes, encompassed by a cooling liquid, have been arranged. Combustion of $SO_{2(g)}$ is also described by H. Scott Fogler (1992). The first part of the optimisation is as follows:

The reaction is exothermic and given as:

$$SO_2(g) + 1/2\,O_2(g) = SO_3(g) \qquad (II)$$

- The reaction speed is given by Fogler:

$$r = r_{SO_3} = k \cdot \rho \cdot \sqrt{\frac{1-X}{X}} \cdot \left[ p_{A0} \cdot \left( \frac{0.91 - 0.5 \cdot X}{1 - 0.055 \cdot X} \right) \cdot \left( \frac{P}{P_0} \right) - \left( \frac{X}{(1-X) \cdot K_P} \right)^2 \right] \qquad (17)$$

where

$\rho$ =        bulk density
P =        pressure
$P_0$ =        starting pressure
$PA_0$ =        starting pressure for component A
X =        degree of reaction
$K_P$ =        equilibrium constant

In equation (16) all concentrations (partial pressures) are stated as a function of the degree of reaction.

- Thermodynamic power is given by:

$$-\frac{A}{T} = -R \cdot \left\{ \ln\left[ \left( \frac{P_0}{P_{A0} \cdot P} \right)^{0.5} \cdot \left( \frac{X}{1-X} \right) \cdot \left( \frac{1 - 0.055 \cdot X}{0.91 - 0.5 \cdot X} \right)^{0.5} \right] - \ln(K_P) \right\} \qquad (18)$$

It is here assumed an ideal gas mixture.
- Derivating with regard to the degree of reaction so that an optimal solution is given by:

$$\int_L \frac{\delta}{\delta X} \left[ -r \cdot \frac{A}{T} + \lambda \cdot r \right] dx = 0 \qquad (19)$$

- The solution to equation (19) inserted in (18) for the force is given by

$$-\frac{A}{T} = R \cdot \frac{\left[\dfrac{1}{X \cdot (1-X)} + \dfrac{0.5 \cdot 0.45}{(1-0.055 \cdot X) \cdot (0.91 - 0.5 \cdot X)}\right] \cdot \Gamma}{\left[\dfrac{-0.5}{(1-X) \cdot X} - \dfrac{0.45 \cdot p_{A0}}{(1-0.055 \cdot X)^2} \cdot \left(\dfrac{P}{P_0}\right) - \dfrac{2X}{(1-X)^3 \cdot K_p^{\ 3}}\right]} - \lambda \qquad (20)$$

where

$$\Gamma = p_{A0} \cdot \left(\frac{0.91 - 0.5 \cdot X}{1 - 0.055 \cdot X}\right) \cdot \left(\frac{P}{P_0}\right) - \left[\frac{X}{(1-X) \cdot K_P}\right]^2$$

wherein $\Gamma$ = parameter

The solution is very complex, but as shown in figure 2 the driving force is approximately constant throughout the reactor (i.e. the first part of the force fluctuates only to a small degree throughout the reactor).

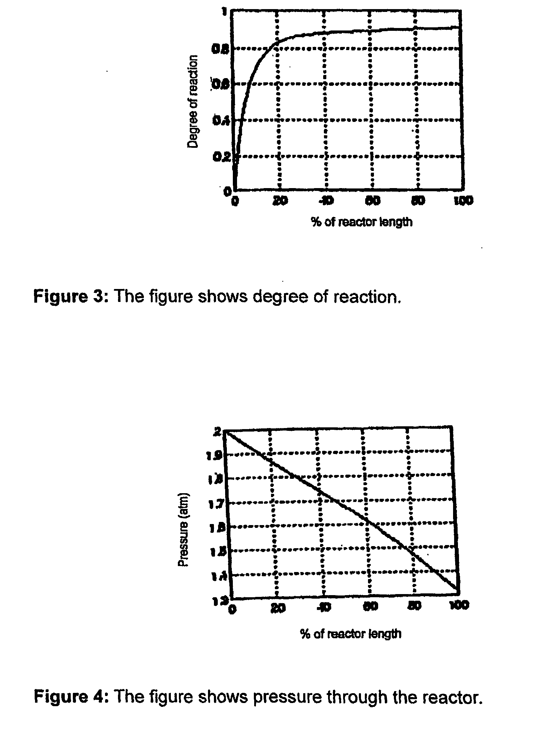

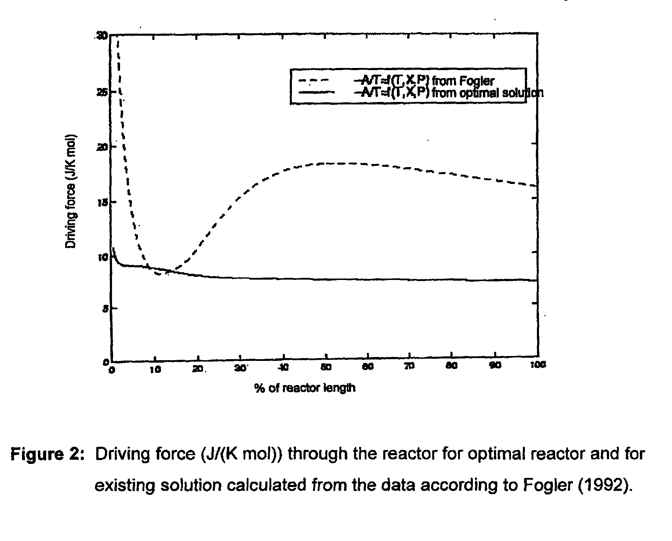

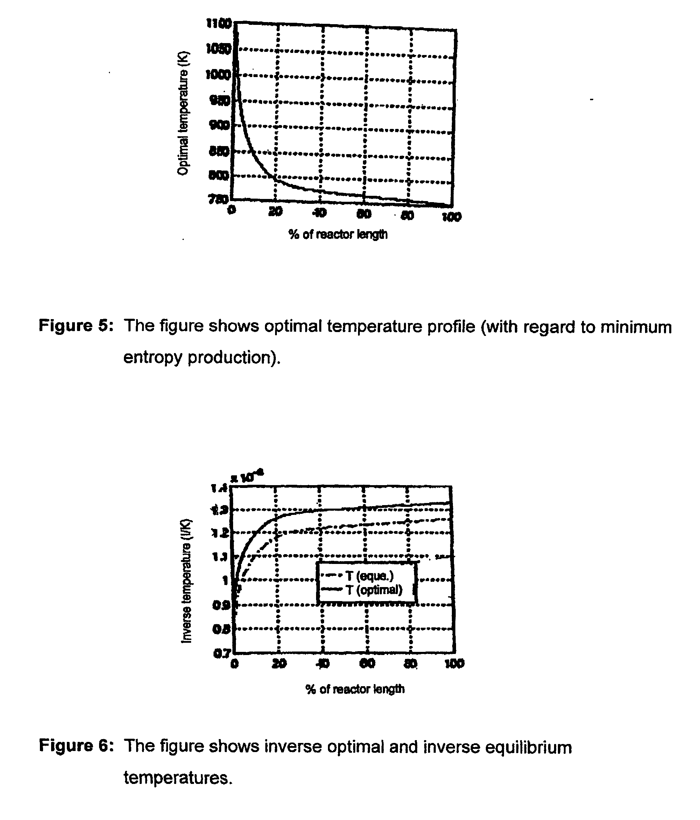

- Figure 3 shows degree of reaction and figure 4 shows pressure through the reactor according to the solution of Fogler (it is a solution which Fogler claims to be the most optimal with regard to reaction). These values are used as starting values when calculating optimal temperature profile in the present invention as shown in figures 5 and 6. The flow diagram according to figure 1 is used when calculating optimal temperature profile.
- Figure 2 shows driving force through the reactor for the present invention (stated as optimal in figure 2) and Fogler's solution. It is evident from the figure that optimal driving force through the reactor is approximately equipartitioned even for reactions far from equilibrium (for reactions close to equilibrium the force is equipartitioned through the reactor (Sauar et al., 1997)). The figure shows that the force for Fogler's solution is far too high at the beginning and the end of the reactor for it to be effecient according to equation (2).

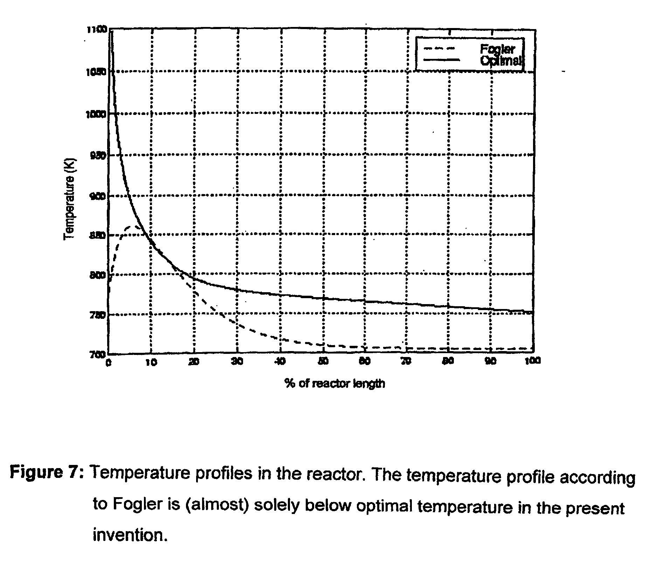

- Figure 2 gives an approximate value of the optimal force through the reactor. We see that it is approximately constant (equipartitioned) through the reactor. It is the complexity of the reactor which determines the optimal line/ curve. Figure 7 tells how we can achieve the optimal force in practice. In the figure the temperature profile for an optimal solution is drawn in. Also Fogler's temperature profile is given as a comparison. The designation or operating task will be to come so close to the optimal solution as possible. Figure 7 therefore shows that the reactor with approximately equipartitioned force according to the present invention will liberate heat at higher temperature throughout almost the whole length of the reactor. In the beginning the difference will be 100-300°C, but at the end of the reactor the difference will be approximately 50°C.

Now the first part of the optimisation according to the present invention is carried out in a manner where focus has been directed to the temperature. Figure 7 shows that the temperature in this case should be increased at the beginning and at the end of the reactor to make the reactor more efficient according to equation (2).

The second part of the optimisation is as follows:

In the first part of the optimisation $J_{num}$ was calculated using equation (11).
Then it should be controlled if $J = J_{num}$ by equation (15) and (10):

Changes can then be made if $J = J_{num}$ is not satisfied.

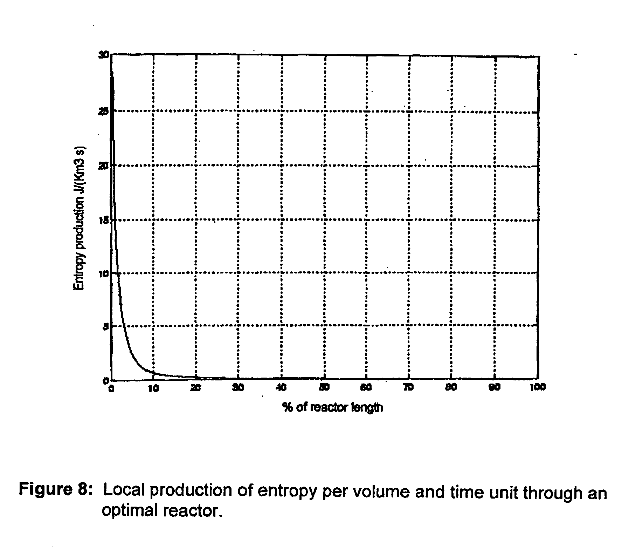

In the following we will only show two amendments in the operating conditions which involve coming closer (but not equal) to the optimal line/curve (see figure 7). Both will have a positive effect on the comsumption of energy in the reactor. By minimisation of the production of entropy in one or more reactors, it is important to know where the production of entropy (the local) is largest. Figure 8 shows local production of entropy through the reactor by the present method. The production of entropy is clearly largest at the beginning of the reactor so that actions to reduce loss of energy in the reactor should be carried out at the start.

Two selected methods for reducing the production of entropy are as follows:

**1)** reduction of cooling at the beginning of the reactor, and **2)** increasing the inlet temperature above the existent.

The two mentioned methods are more closely explained in the following:

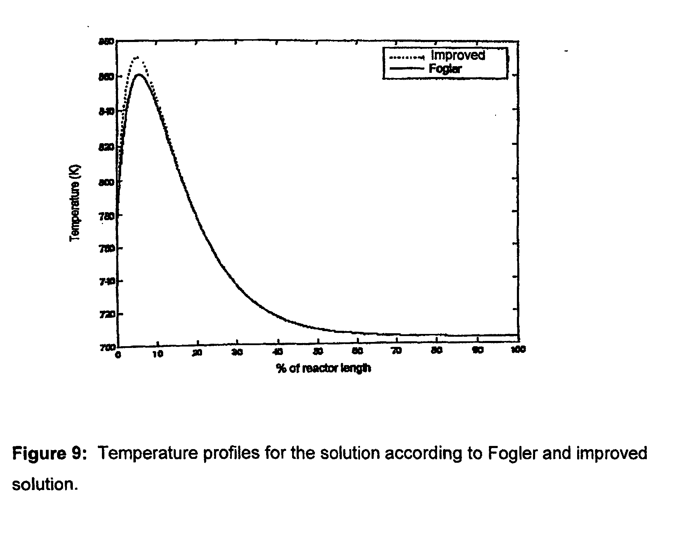

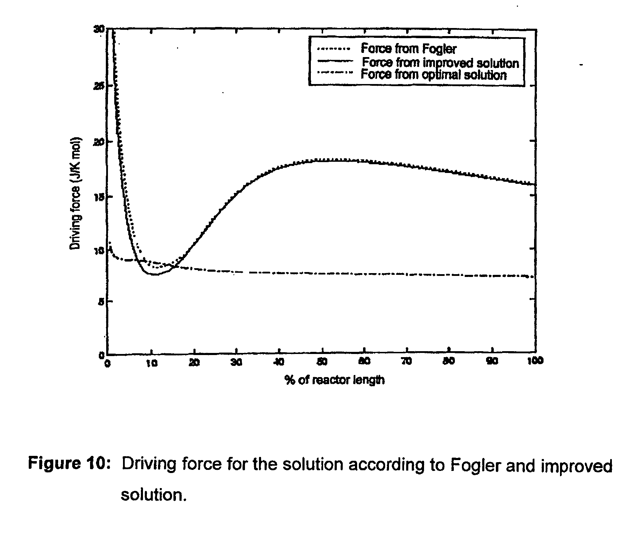

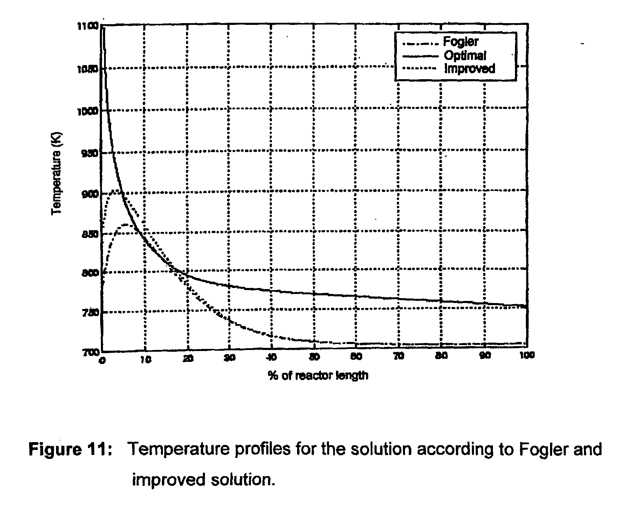

**1)** Because the reaction is exothermic and produces heat, the reactor has to be cooled with a suitable liquid/gas. From figure 11 it is evident that the cooling liquid is cooling too much (Fogler, 1992). The most obvious will then be to find another suited cooling medium; we will, however, only take a look at the result by omitting the cooling at the beginning of the reactor to obtain a higher temperature. We therefore do not use any cooling in the first part of the reactor. The temperature profile in the reactor will then be as shown in figure 9, wherein the temperature profile according to Fogler's solution also is drawn up. Figure 10 shows how the driving force in the reactor has been changed in direction against optimal force, which thereby gives reduced entropy production and thereby a reduction in lost work. Table 1 shows the production of entropy per mole $SO_3$ produced.

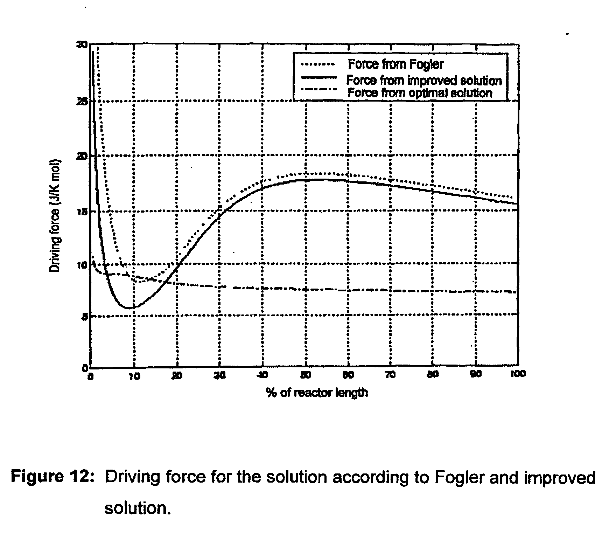

**2)** We assume that it is possible to increase the inlet temperature from 778 K to 833 K. Figure 11 shows the change in the temperature profile. Figure 12 shows how the driving force in the reactor has changed in direction against optimal force. Table 1 shows the production of entropy per mole $SO_3$ produced.

Table 1:

| The table shows the production of entropy per mole $SO_3$ produced by the solution according to Fogler and the methods 1 and 2 (stated in the tables as solution 1 and solution 2). The production of entropy is only the contribution from **chemical reaction** (equation (4)). The production for the two selected methods (1 and 2) both give a better result than known art described by Fogler. | | | |
|---|---|---|---|
|  | Fogler's solution | Solution 1) | Solution 2) | Optimal solution |
| Entropy production per mole $SO_3$ produced /J/K | 21.81 | 20.65 | 16.05 | 9 |

The exergy loss from chemical reaction is responsible for the highest contribution to the production of entropy in a chemical reactor. In addition the production of entropy from the transport of heat from the reactor to the cooling liquid will give a not significant contribution. In the following we will assume that the total contribution to the entropy production is:

$$\Theta = \Theta_{chemical} + \Theta_{heat} \tag{21}$$

The production of entropy from the transport of heat can be calculated according to the formula (Kjelstrup et al., 1998):

$$\Theta_{heat} = \sum_{i=1}^{p} S_n \cdot U \cdot \frac{(T_r - T_k)^2}{T_v \cdot T_k} \tag{22}$$

where the reactor is partitioned into $p$ sub-volumes where the temperature on cold (k) and warm (v) side is considered as constant

$S_n =$      area of sub-volume $n$
$U =$      thermal transmittance number

**[0040]** Table 2 shows the production of entropy for the transport of heat from the reactor stream to the cooling liquid for the solution according to Fogler and solution 1) and 2).

Above improvements are shown for the methods 1 and 2 which are performed to achieve an optimal solution where $J \approx J_{num}$. Improvements can be carried out until $J = J_{num}$.

Table 2:

| The table shows the production of entropy per mole $SO_3$ produced from the **transport of heat** (equation (21) and (22)). | | | |
|---|---|---|---|
| | Fogler's solution | Solution 1) | Solution 2) |
| Entropy production per mole $SO_3$ produced /J/K | 1.99 | 2.10 | 2.75 |

Table 3 shows total entropy production, lost work (exergy loss) and change in relation to the solution by Fogler, per mole produced $SO_3$.

Table 3:

| *Total* entropy production and lost work (exergy loss) per mole produced $SO_3$. Lost work (exergy loss) is the product between the production of entropy and the surrounding temperature ($T_0$), which is set to 298 K. | | | |
|---|---|---|---|
| | Fogler's solution | Solution 1) | Solution 2) |
| Entropy production per mole $SO_3$ produced /J/K | 23.80 | 22.75 | 18.80 |
| Lost work (exergy loss) per mole $SO_3$ produced /J | 7100 | 6780 | 5600 |
| Reduktion in lost work (exergy loss) (%) | Reference | -5 | -21 |

By using a suitable cooling liquid at higher temperatue the following can be achieved:

**1)** Reduced exergy loss from chemical reaction
**2)** Reduced exergy loss from transport of heat
**3)** Increased yield in the reactor.[2]

**LIST OF SYMBOLS**

| A | Affinity | J/mol |
|---|---|---|
| A | Component | |
| B | Component | |
| ΔEx | Change in exergy | J/mol |
| ΔG | Change in Gibbs' free energy | J/mol |
| J | Yield | kmol/h |
| K | Equilibrium constant | $atm^{-0.5}$ |
| L | Reactor length | m |
| P | Pressure | atm |
| R | Gas constant | J/(K mol) |
| S | Surface area | $m^2$ |
| T | Temperature | K |
| U | Thermal transmittance number | $W/(K\ m^2)$ |
| W | Performed work | J/mol |
| X | Force for heat transport | $K^{-1}$ |
| X | Degree of reaction | |
| c | General concentration | |
| k | General speed constant | |
| k | Speed constant | mol/(g kat s atm) |
| r | Reaction speed | $mol/(m^3\ s)$ |

[2] This is shown through computer simulations where the practical performability is not controlled. One of the problems is to find a suited cooling medium.

(continued)

| x | Reactor position | |
|---|---|---|
| $\Gamma$ | Parameter | |
| $\Theta$ | The total production of entropy per produced mole | J/K |
| $\Omega$ | Cross section of the reactor | $m^2$ |
| $\delta$ | Functional derived | |
| $\eta$ | Efficiency | |
| $\theta$ | Local entropy production | $J/(K\ m^3\ s)$ |
| $\lambda$ | Lagrange-multiplier | |
| $\mu$ | Chemical potential | J/mol |
| $\rho$ | Bulk density | $kg/m^3$ |
| $\partial$ | Partial derived | |

*Subscript/superscript*

| *eq* | Equilibrium |
|---|---|
| *h* | Warm |
| *k* | Cold |
| *chemical* | Contribution from chemical reaction |
| *max* | Makximum |
| *n* | Sub-volume n |
| *varme* | Contribution from heat transport |
| *0* | Surroundings |

**LITERATURE LIST**

De Groot, S.R. and Mazur, P.: *Non-equilibrium thermodynamics,* North- Holland, Amsterdam, 1962.

Denbign, K. G.: *The second-law of chemical processes*, Chemical Engineering Science, **6,** 1-9 (1956).

Fogler, H.S.: *Elements of Chemical Reaction Engineering,* 2nd. ed., Prentice-Hall International, Inc., USA, 1992.

Kjelstrup, S., Sauar, E., Bedeaux, D. and Kooi, H.van der: *The driving force for distribution of minimum entropy production in chemical reactors close to and far from equlibrium,* ikke publisert, RA Leiden, The Netherlands, 1997.

Ratkje, S.K. and Arons, J. De Swaan: *Denbigh revisited: Reducing lost work in chemical processes,* Chemical Engineering Science, **50,** 1551-1560 (1995).

Ratkje, S.K., Sauar, E., Hansen, E.M., Lien, K.M. and Hafskjold, B: *Analysis of Entropy production Rates for Design of Distillation Columns,* Industrial & Engineering Chemistry Research, **34,** 3001-3007 (1995).

Sauar, E., Kjelstrup, S. and Lien, K.M.: *Equipartition of Forces-Extension to Chemical Reactors,* Computers Chem. Engng., **21,** s29-s34 (1997).

Sauar, E., Ratkje, S.K. and Lien, K.M.: *Equipartition of Forces: A New Principle for Process Design and Optimization,* Industrial & Engineering Chemistry Research, **35,** 4147-4153 (1996).

Kjelstrup, Sauar, Nummedal; unpublished work, 1998

**Claims**

1.    A method for the minimisation of the production of entropy in one or more chemical reactors, where a first number of in-feeded reagents are transformed to another number of out-feeded products, and where a yield of a distinct one of the out-feeded products is set up as a predetermined value J given by equation (6), **characterised in that** the method comprises

   -    establishing concentration profiles X for the reagents, possible intermediate products and the products, and a pressure profile P through the reactor(s),
   -    determining a temperature profile through the reactor(s) by calculation according to a relationship between concentration c, pressure P, temperature T, and by use of a chosen Lagrange-multiplier $\lambda$ which is of influence on the desired yield J of the out-feeded products, according to equation (10) merged into equation (15);

- calculating a yield of the out-feeded products as a theoretical value $J_{num}$ according to equation (11) based on the chosen $\lambda$ and the calculated temperature profile, and the known concentration and pressure profiles X, P, using known thermodynamic and reaction kinetic relations;
- comparing calculated yield $J_{num}$ with the predetermined value J, and if these values are different,
- calculating new concentration, pressure and temperature profiles through the reactor(s) by employing a new value for the Lagrange-multiplier $\lambda$, until the yield value $J_{num}$ and J become equal, and operating the reactor (s) for any desired yield value J with the corresponding pressure, concentration and calculated temperature profiles,

$$J = \iint_{V\ t} r\,dV\,dt \qquad\qquad (6)$$

$$\frac{-A}{T} = \frac{-1}{T}\cdot\left(\mu_B - \mu_A\right) = -R\left[\ln\left(\frac{1-c}{c}\right) + \ln K_{eq}\right] \qquad\qquad (10)$$

$$J = \Omega\cdot t\cdot\int_L \left(k_1\cdot c - k_2\cdot(1-c)\right)dx \qquad\qquad (11)$$

$$\frac{-A}{T} = \frac{R}{k_1 + k_2}\cdot\left(\frac{1}{1-c} + \frac{1}{c}\right) - \lambda \qquad\qquad (15)$$

where V is the volume of the reactor(s); t is time; r is the velocity of the reaction; -A/T is the driving force for the reaction; A is affinity in J/mol and $\mu_A$ and $\mu_B$ are the chemical potentials of an in-feeded reagent and an out-feeded product, respectively, in J/mol; T is temperature; R is the gas constant; c is concentration; $K_{eq}$ is the equilibrium constant $k_2/k_1$ and $k_1$ and $k_2$ are velocity constants; $\Omega$ is the cross-section of the reactor(s); L is the length of the reactor, and wherein if the reactor is a batch reactor equation (11) is integrated over time t.

2. A method according to claim 1, wherein the reactor(s) are operated far away from equilibrium.

3. A method according to claim 1, wherein the reaction is of spontaneous type, and a negative Lagrange-multiplier is used.

4. A method according to any one of claims 1 to 3, wherein the driving force, -A/T, is approximately uniformly distributed through the reactor(s).

5. A method according to any one of claims 1 to 4, for exothermic reactor(s), wherein that the reagents are passed through a first sub-volume of the reactor(s) without cooling, optionally with reduced cooling.

6. A method according to any one of claims 1 to 4, for exothermic reactor(s), wherein the reagents are passed through a last sub-volume of the reactor(s) without cooling, optionally with reduced cooling, so that the final temperature increases.

7. A method according to any one of claims 1 to 4, for endothermic reactor(s), wherein the reagents are passed through a first sub-volume of the reactor(s) without heat supply, possibly with reduced heat supply.

8. A method according to any one of claims 1 to 4, for endothermic reactor(s), wherein the reagents are passed through a last sub-volume of the reactor(s) without heat supply, optionally with reduced heat supply so that the final temperature is reduced.

**Patentansprüche**

1. Verfahren zur Minimierung der Bildung von Entropie in einem oder mehreren chemischen Reaktoren, worin eine erste Anzahl von zugeführten Reaktanten in eine andere Anzahl von abgeführten Produkten überführt werden und eine Ausbeute eines einzelnen der abgeführten Produkte als vorbestimmter Wert J, der durch Gleichung (6) gegeben ist, angesetzt wird, **dadurch gekennzeichnet, dass** das Verfahren umfasst

- Aufstellen von Konzentrationsprofilen X für die Reaktanten, mögliche Zwischenprodukte und die Produkte und eines Druckprofils P über den bzw. die Reaktoren,
- Bestimmen eines Temperaturprofils über den bzw. die Reaktoren durch Berechnung nach einer Beziehung zwischen Konzentration c, Druck P, Temperatur T und durch Anwendung eines gewählten Lagrange-Multiplikators $\lambda$, der von Einfluss auf die gewünschte Ausbeute J der abgeführten Produkte ist, nach der Gleichung (10), die in Gleichung (15) aufgenommen wird,
- Berechnen einer Ausbeute der abgeführten Produkte als theoretischer Wert $J_{num}$ nach der Gleichung (11) auf Basis des gewählten $\lambda$ und des berechneten Temperaturprofils und der bekannten Konzentrations- und Druckprofile X, P unter Anwendung bekannter thermodynamischer und reaktionskinetischer Beziehungen,
- Vergleichen der berechneten Ausbeute $J_{num}$ mit dem vorbestimmten Wert J, und, falls diese Werte verschieden sind,
- Berechnen einer neuen Konzentration, eines neuen Drucks und von neuen Temperaturprofilen über den bzw. die Reaktoren durch Einsetzen eines neuen Werts für den Lagrange-Multiplikator $\lambda$, bis der Ausbeutewert $J_{num}$ und J gleich werden, und Betreiben des bzw. der Reaktoren für jeden gewünschten Ausbeutewert J mit dem entsprechenden Druck, der entsprechenden Konzentration und den berechneten Temperaturprofilen

$$J = \int_V \int_t r\,dV\,dt \tag{6}$$

$$\frac{-A}{T} = \frac{-1}{T} \cdot \left( \mu_B - \mu_A \right) = -R\left[ \ln\left( \frac{1-c}{c} \right) + \ln K_{eq} \right] \tag{10}$$

$$J = \Omega \cdot t \cdot \int_L \left( k_1 \cdot c - k_2 \cdot (1-c) \right) dx \tag{11}$$

$$\frac{-A}{T} = \frac{R}{k_1 + k_2} \cdot \left( \frac{1}{1-c} + \frac{1}{c} \right) - \lambda \tag{15}$$

worin V das Volumen des bzw. der Reaktoren ist, t die Zeit ist, r die Geschwindigkeit der Reaktion ist, -A/T die treibende Kraft für die Reaktion ist, A die Affinität in J/Mol ist und $\mu_A$ und $\mu_B$ die chemischen Potentiale eines zugeführten Reaktanten bzw. eines abgeführten Produktes in J/Mol sind, T die Temperatur ist, R die Gaskonstante ist, c die Konzentration ist, $K_{eq}$ die Gleichgewichtskonstante $k_2/k_1$ ist und $k_1$ und $k_2$ Geschwindigkeitskonstanten sind, $\Omega$ der Querschnitt des bzw. der Reaktoren ist, L die Länge des Reaktors ist und wobei, wenn der Reaktor ein Chargenreaktor ist, Gleichung (11) über die Zeit t integriert wird.

**2.** Verfahren nach Anspruch 1, worin der bzw. die Reaktoren weit entfernt vom Gleichgewicht betrieben werden.

**3.** Verfahren nach Anspruch 1, worin die Reaktion vom spontanen Typ ist und ein negativer Lagrange-Multiplikator verwendet wird.

**4.** Verfahren nach irgendeinem der Ansprüche 1 bis 3, worin die treibende Kraft, -A/T, ungefähr gleichmäßig über den bzw. die Reaktoren verteilt ist.

**5.** Verfahren nach irgendeinem der Ansprüche 1 bis 4 für einen oder mehrere exotherme Reaktoren, worin die Reaktanten ohne Kühlen, gegebenenfalls mit reduziertem Kühlen, durch ein erstes Subvolumen des bzw. der Reaktoren geleitet werden.

**6.** Verfahren nach irgendeinem der Ansprüche 1 bis 4 für einen oder mehrere exotherme Reaktoren, worin die Reaktanten ohne Kühlen, gegebenenfalls mit reduziertem Kühlen, durch ein letztes Subvolumen des bzw. der Reaktoren geleitet werden, so dass die Endtemperatur ansteigt.

**7.** Verfahren nach irgendeinem der Ansprüche 1 bis 4 für einen oder mehrere endotherme Reaktoren, worin die Reaktanten ohne Wärmezufuhr, möglicherweise mit verminderter Wärmezufuhr, durch ein erstes Subvolumen des bzw. der Reaktoren geleitet werden.

**8.** Verfahren nach irgendeinem der Ansprüche 1 bis 4 für einen oder mehrere endotherme Reaktoren, worin die Reaktanten ohne Wärmezufuhr, gegebenenfalls mit verminderter Wärmezufuhr, durch ein letztes Subvolumen des bzw. der Reaktoren geleitet werden, so dass die Endtemperatur verringert wird.

**Revendications**

**1.** Procédé pour la réduction à un minimum de la production d'entropie dans un ou plusieurs réacteurs chimiques, dans lequel un premier nombre de réactifs d'entrée sont transformés en un autre nombre de produits de sortie, et dans lequel un rendement en un produit distinct parmi les produits de sortie est établie en tant que valeur prédéterminée J donnée par l'équation (6), **caractérisé en ce que** le procédé comprend :

- l'établissement de profils de concentration X pour les réactifs, des produits intermédiaires éventuels et les produits, et d'un profil de pression P au sein du ou des réacteurs,
- la détermination d'un profil de température au sein du ou des réacteurs par un calcul conformément à une relation entre la concentration c, la pression P, la température T, et par l'utilisation d'un multiplicateur de Lagrange λ choisi qui a une influence sur le rendement souhaité J en produits de sortie, conformément à l'équation (10) fusionnée en l'équation (15) ;
- le calcul d'un rendement en produits de sortie en tant que valeur théorique $J_{num}$ conformément à l'équation (11) sur la base du λ choisi et du profil de température calculé, et des profils de concentration et de pression X, P connus, en utilisant des relations thermodynamiques et cinétiques de réaction connues ;
- la comparaison du rendement calculé $J_{num}$ avec la valeur prédéterminée J et, si ces valeurs sont différentes,
- le calcul de nouveaux profils de concentration, de pression et de température au sein du ou des réacteurs en utilisant une nouvelle valeur pour le multiplicateur de Lagrange λ, jusqu'à ce que la valeur de rendement $J_{num}$ et J deviennent égales, et la mise en oeuvre du ou des réacteurs pour toute valeur de rendement J souhaitée avec les profils de pression, de concentration et de température calculée correspondants,

$$J \;=\; \int\limits_{V}\int\limits_{t} rdVdt \qquad\qquad (6)$$

$$\frac{-A}{T} \;=\; \frac{-1}{T}\cdot\left(\mu_B - \mu_A\right) \;=\; -R\left[\ln\!\left(\frac{1-c}{c}\right) + \ln K_{eq}\right] \qquad\qquad (10)$$

$$J \;=\; \Omega \cdot t \cdot \int_{L}\big(k_{1}\cdot c - k_{2}\cdot(1-c)\big)\,dx \qquad\qquad (11)$$

$$\frac{-A}{T} \;=\; \frac{R}{k_{1}+k_{2}}\cdot\left(\frac{1}{1-c}+\frac{1}{c}\right)-\lambda \qquad\qquad (15)$$

où V est le volume du ou des réacteurs ; t est le temps ; r est la vitesse de la réaction ; -A/T est la force motrice pour la réaction ; A est l'affinité en J/mole et $\mu_A$ et $\mu_B$ sont, respectivement, les potentiels chimiques d'un réactif d'entrée et d'un produit de sortie, en J/mole ; T est la température ; R est la constante des gaz ; c est la concentration ; $K_{eq}$ est la constante d'équilibre $k_2/k_1$ et $k_1$ et $k_2$ sont les constantes de vitesse ; $\Omega$ est la section du ou des réacteurs ; L est la longueur du réacteur ; et si le réacteur est un réacteur à fonctionnement discontinu, l'équation (11) est intégrée dans le temps t.

2. Procédé selon la revendication 1, dans lequel le ou les réacteurs sont mis en oeuvre loin de l'équilibre.

3. Procédé selon la revendication 1, dans lequel la réaction est de type spontané et un multiplicateur de Lagrange négatif est utilisé.

4. Procédé selon l'une quelconque des revendications 1 à 3, dans lequel la force motrice, -A/T, est à peu près uniformément distribuée au sein du ou des réacteurs.

5. Procédé selon l'une quelconque des revendications 1 à 4, pour réacteur(s) exothermique(s), dans lequel les réactifs passent à travers un premier sous-volume du ou des réacteurs sans refroidissement, optionnellement avec un refroidissement réduit.

6. Procédé selon l'une quelconque des revendications 1 à 4, pour réacteur(s) exothermique(s), dans lequel les réactifs passent à travers un dernier sous-volume du ou des réacteurs sans refroidissement, optionnellement avec un refroidissement réduit, de sorte que la température finale augmente.

7. Procédé selon l'une quelconque des revendications 1 à 4, pour réacteur(s) endothermique(s), dans lequel les réactifs passent à travers un premier sous-volume du ou des réacteurs sans apport de chaleur, éventuellement avec un apport de chaleur réduit.

8. Procédé selon l'une quelconque des revendications 1 à 4, pour réacteur(s) endothermique(s), dans lequel les réactifs passent à travers un dernier sous-volume du ou des réacteurs sans apport de chaleur, optionnellement avec un apport de chaleur réduit, de sorte que la température finale soit réduite.

Selection of the concentration (X) and pressure profile (P) through the reactor. These can be profiles from the reactor which should be optimsed. The yield of a distinct of the out-feeded products is stated as a desired value (J).

↓

Selection of a lambda-multiplier. The constant is negative for spontaneous reactions.

↓

Optimal temperature profile is determined from equation (10) inserted in equation (15).

↓

Because temperature, pressure and reaction is known throughout the reactor, a theoretical value Jnum for yield is numerically calculated according to equation (11); J-num.

↓

IS
J-num=J
?

No

Yes

↓

Optimal solution has been found (maximum or minimum) for entropy production. With that the optimal solution for dissipated energy has been found.

Figure 1: Flow sheet for the solution model

**Figure 3:** The figure shows degree of reaction.

**Figure 4:** The figure shows pressure through the reactor.

**Figure 2:** Driving force (J/(K mol)) through the reactor for optimal reactor and for existing solution calculated from the data according to Fogler (1992).

**Figure 5:** The figure shows optimal temperature profile (with regard to minimum entropy production).

**Figure 6:** The figure shows inverse optimal and inverse equilibrium temperatures.

**Figure 7:** Temperature profiles in the reactor. The temperature profile according to Fogler is (almost) solely below optimal temperature in the present invention.

**Figure 8:** Local production of entropy per volume and time unit through an optimal reactor.

**Figure 9:** Temperature profiles for the solution according to Fogler and improved solution.

**Figure 10:** Driving force for the solution according to Fogler and improved solution.

**Figure 11:** Temperature profiles for the solution according to Fogler and improved solution.

**Figure 12:** Driving force for the solution according to Fogler and improved solution.